# EUROPÄISCHE PATENTSCHRIFT

(11) **EP 1 460 373 B1**
(45) Veröffentlichungstag und Bekanntmachung des Hinweises auf die Patenterteilung: **10.03.2010**
(21) Anmeldenummer: 04006807.4
(22) Anmeldetag: 22.03.2004
(51) Int. Cl.: G01B 5/00, G01B 5/004, G01B 5/02, G01B 5/20

(54) **Verfahren und Vorrichtung zum Erfassen einer Länge oder Form eines Werkstücks**
Method and apparatus for measuring the length or the shape of a workpiece
Procédé et dispositif de mesure de la longueur ou de la forme d'une pièce usinée

(30) Priorität: 21.03.2003 DE 10312789
(43) Veröffentlichungstag der Anmeldung: 22.09.2004
(73) Patentinhaber: Huber, Stephan, 75155 Pforzheim (DE)
(72) Erfinder: Huber, Stephan, 75155 Pforzheim (DE)
(74) Vertreter: Maser, Jochen

(56) Entgegenhaltungen:
- EP-A- 0 529 494
- US-A- 4 530 159
- US-A- 5 396 712
- US-A- 5 669 867
- US-A- 5 914 876

## Beschreibung

Die Erfindung betrifft ein Verfahren und eine Vorrichtung zum Erfassen einer Länge oder Form eines Werkstücks in einer Bearbeitungsmaschine.

Aus der US-A 5,669,867 ist eine mehrachsige Bearbeitungsmaschine bekannt, die eine programmierbare Steuerung beinhaltet, um einzelne Funktionen der Werkzeugmaschinen anzusteuern. Um die unterschiedlichen Bearbeitungen durchzuführen, werden die einzelnen Werkzeuge aus einem Magazin entnommen. Gleichzeitig ist ermöglicht, dass die Werkzeugspindel zur Aufnahme der Werkzeuge zwischen einer ersten und einer zweiten, auf demselben Maschinenbett angeordneten Werkstückaufnahme verfahrbar ist. Eine weitere Werkzeugmaschine zur Bearbeitung von Werkstücken ist aus der US-A 5,914,876 bekannt.

Aus der US-A 5,496,712 geht eine Messvorrichtung mit einem Tastelement hervor, bei dem das Tastelement durch Schwenkarme in einen Messbereich einschwenkbar ist. Eine Messung in dem Werkstück wird in dieser Messstation durchgeführt, nachdem das zu messende Werkstück auf einem Messtisch der Messvorrichtung positioniert und befestigt wurde. Nach der Messung des Werkstückes wird dieses von dem Messtisch entfernt und aus der Messvorrichtung zur weiteren Verwendung wieder herausgenommen.

Aus der US-A 4,530,159 ist ein Messkopf mit einem Tastelement bekannt, welches beispielsweise in der zuvor genannten Messvorrichtung einsetzbar ist. Aus der EP 0 529 494 A1 geht ebenfalls ein Messkopf mit einem Tastelement hervor, welches als Kantentaster einsetzbar ist.

In Bearbeitungsmaschinen, deren vorangegangenen Bearbeitungsschritte verschiedentlich ausgebildet sein können, findet beispielsweise in einem letzten Arbeitsschritt ein Abstechen des Werkstücks statt. Bevor das Werkstück abgestochen und als Zwischenprodukt weiterbearbeitet oder als Endprodukt ausgeliefert wird, ist erforderlich, dass die Maßhaltigkeit der Teile geprüft ist, um eine Entscheidung zu treffen, ob es sich nach dem Abstechen um ein Gut- oder Schlechtteil handelt.

Der Erfindung liegt deshalb die Aufgabe zugrunde, ein Verfahren und eine Vorrichtung zu schaffen, welche ermöglicht, dass die Länge oder Form des Werkstückes, welches in einer Bearbeitungsmaschine hergestellt wird, geprüft und überwacht wird.

Diese Aufgabe wird erfindungsgemäß durch ein Verfahren gemäß den Merkmalen des Anspruchs 1 gelöst. Weitere vorteilhafte Ausgestaltungen und Weiterbildungen sind in den weiteren abhängigen Ansprüchen angegeben.

Das erfindungsgemäße Verfahren ermöglicht einen Einsatz sowie eine Nachrüstung von zumindest einer aktiven oder passiven Messvorrichtung in Bearbeitungsmaschinen oder Bearbeitungszentren, bei denen eine Werkstücktrommel zur Aufnahme von wenigstens zwei Werkstücken vorgesehen ist. Die Werkstücktrommel wird zum Wechsel der Werkstücke in eine nächste Bearbeitungsstation geschwenkt und eine Messung des Werkstücks durchgeführt und von der Prozesssteuerung überwacht.

Eine Messvorrichtung kann erfingdungsgemäß aktiv ausgebildet sein. Beispielsweise wird die Messvorrichtung auf das Werkstück zubewegt, wodurch eine aktive Abfrage durch die Messvorrichtung durchgeführt wird.

Ebenso erfindungsgemäß kann eine passive Abfrage durch die Messvorrichtung vorgesehen sein, indem die Messvorrichtung durch das Werkstück betätigt wird. Die durch die Messvorrichtung erfassten Messwerte werden durch eine Prozesssteuerung überwacht, so dass umgehend Informationen über das unmittelbar geprüfte Werkstück bereitgestellt werden.

Nach einer vorteilhaften Ausgestaltung der Erfindung ist vorgesehen, dass zumindest eine Messvorrichtung in einem Schwenkbereich des Werkstückes zwischen zwei Bearbeitungsstationen positioniert wird und die Messvorrichtung beim Überführen des Werkstücks von einer Bearbeitungsstation in eine nachfolgende Bearbeitungsstation betätigt wird. Eine derartige passive Anordnung ermöglicht eine präzise Erfassung der Länge eines Werkstückes oder eine bestimmte Geometrie, welche dem Schwenkbereich beim Überfahren der Messvorrichtung zugeordnet ist.

Nach einer weiteren vorteilhaften Ausgestaltung der Erfindung ist vorgesehen, dass die Messvorrichtung auf ein Werkstück zubewegt wird und der Weg der Messvorrichtung bis zur Anlage an dem Werkstück ermittelt wird. Dadurch kann eine aktive Messwerterfassung und Überwachung durchgeführt werden. Sobald ein Messkopf der Messvorrichtung zur Anlage an dem Werkstück kommt, wird ein Signal ausgegeben, welches die Zuführbewegung der Messvorrichtung beendet und gleichzeitig den Messzyklus abschließt.

Die Messvorrichtung zur Durchführung des Verfahrens weist nach einer vorteilhaften Ausgestaltung der Erfindung einen in ein Gehäuse eintauchbaren Messkopf auf. Ein Eintauchweg des Messkopfes wird durch die Messvorrichtung erfasst.

In einer weiteren vorteilhaften Ausführungsform des Verfahrens ist vorgesehen, dass die Messvorrichtung aktiv eine Form des Werkstücks überwacht. Hierzu weist der Messkopf eine vorgegebene Geometrie des Werkstücks auf und wird zum überwachenden Werkstück positioniert. Sofern ein vorgegebener Weg nicht ohne Eintauchbewegung des Messkopfes durchgeführt wird, erfolgt die Ausgabe eines Fehlersignals, da der Messkopf nicht lagerichtig zum Werkstück positioniert ist. Des weiteren ist durch dieses Verfahren bei einer lagerichtigen Positionierung des Messkopfes zum Werkstück ermöglicht, dass eine Rundlaufprüfung durchgeführt wird. Bei dieser Überwachung wird die Eintauchbewegung des Messkopfes, der an dem Werkstück anliegt, überwacht, welches während der Messung um wenigstens einmal 360° gedreht wird.

Die Messvorrichtung wird vorteilhafterweise zur Stirnseite eines Werkstücks positioniert und der Verschiebweg einer Werkstücktrommel zum Wechsel des Werkstücks in eine nachfolgende Bearbeitungsstation erfasst. Diese Positionierung der Messvorrichtung wird besonders bei einer Werkstücktrommel einer Hirthverzahnung vorgesehen. Dadurch kann die exakte Länge des Werkstückes vor dem Abstechen des Werkstückes in einem letzten Bearbeitungsschritt erfasst werden.

Des weiteren ist vorteilhafterweise bei der Überwachung eines Werkstückes in einer Bearbeitungsmaschine mit einer Hirthverzahnung vorgesehen, dass parallel zur die Werkstücklänge überwachenden Messvorrichtung zumindest eine weitere Messvorrichtung vorgesehen ist, welche einen Verschiebeweg der Werkstücktrommel beim Wechsel von einer Bearbeitungsstation in die nächste Bearbeitungsstation erfasst. Dadurch kann das Spiel der Werkstücktrommel erfasst werden. Bevorzugt werden die erfassten Messwerte bezüglich der Länge des Werkstücks und des im gleichen Zeitraum erfassten Spiels der Werkstücktrommel miteinander verglichen, wodurch eine höhere Messgenauigkeit erzielt wird. Bei dieser vorteilhaften Ausführungsform können die Messvorrichtungen in einem Schwenkbereich zwischen zwei Bearbeitungsstationen angeordnet sein.

Die erfindungsgemäße Vorrichtung gemäß Anspruch 9, insbesondere zur Durchführung des Verfahrens, weist zumindest eine Messvorrichtung auf, welche aktiv oder passiv zumindest teilweise in einem Schwenkbereich des zumindest einen Werkstücks sich erstreckt und die erfassten Signale an eine Prozesssteuerung weiterleitet. Dadurch ist die Durchführung einer Messung auch in sehr schwer zugänglichen Bereichen ermöglicht. Auch kann eine Nachrüstung der Vorrichtung zur Prozessüberwachung gegeben sein.

Die Messvorrichtung erfasst vorteilhafterweise eine Länge des Werkstückes, welche zwischen einer Einspannstelle und einem freien Ende des Werkstücks ausgebildet ist. Dadurch kann für einen nachfolgenden Bearbeitungsvorgang, bei dem das Werkstück auf eine bestimmte Länge abgestochen wird, ermittelt werden, ob die Werkstücklänge innerhalb der Toleranz liegt. Bei einem feststehenden Werkzeug zum Abstechen des Werkstücks kann in Abhängigkeit der erfassten Länge eine Entscheidung getroffen werden, ob es sich um ein Gutteil oder einen Ausschuss handelt. Bei einem verfahrbaren Werkzeug kann eine Anpassung der Werkzeugposition auf die erfasste Länge über die Prozesssteuerung erfolgen und die richtige Werkstücklänge produziert werden.

Die Messvorrichtung weist nach einer vorteilhaften Ausführungsform der Erfindung einen Messkopf auf, der im Randbereich eine Aufgleitfläche oder Auflaufschräge umfasst. Dadurch kann das Werkstück beim Vorbeischwenken von einer Bearbeitungsstation in eine weitere Bearbeitungsstation die Messvorrichtung betätigen und ein Signal auslösen. Der Messkopf ist vorzugsweise rotationssymmetrisch ausgebildet, so dass unabhängig der Ausrichtung der Messvorrichtung eine sichere Betätigung gegeben ist.

Die Messvorrichtung weist einen Messkopf auf, der von einem zylindrischen Schaft aufgenommen ist und vorgespannt in einem Gehäuse der Messvorrichtung positioniert und in das Gehäuse eintauchbar ausgebildet ist. Dadurch kann eine definierte Lage des Messkopfes als Nullpunkt eingestellt werden. Ein Eintauchweg des Schaftes in das Gehäuse wird erfasst und in eine Wegstrecke umgesetzt. Dadurch können sehr präzise Messungen durchgeführt werden. Die Messvorrichtung arbeitet vorzugsweise mit einer Genauigkeit von weniger als +/- 20 µm, vorzugsweise weniger als +/- 10 µm.

Nach einer vorteilhaften Ausgestaltung der Messvorrichtung ist vorgesehen, dass der Schaft zur Aufnahme des Messkopfes eine Sollbruchstelle umfasst. Dadurch kann verhindert werden, dass bei einem auftretenden Fehler ein leichtes Abscheren des Schaftes ermöglicht ist, ohne dass weitere Beschädigungen auftreten. Insbesondere bei sehr filigranen Teilen, die durch eine sehr präzise Bearbeitungsmaschine bearbeitet werden, ist dies von Vorteil.

Nach einer weiteren vorteilhaften Ausgestaltung der Erfindung ist vorgesehen, dass eine Haltevorrichtung zur Aufnahme der zumindest einen Messvorrichtung vorgesehen ist. Diese kann auf die jeweiligen zu stellenden Werkstücke eingestellt und positioniert werden, so dass die Messvorrichtungen die geforderten Bereiche oder Größen, wie Länge, Form oder Geometrie, Durchmesser oder dergleichen der Werkstücke überwachen. Diese Haltevorrichtung kann fest zum Maschinenbett der Bearbeitungsmaschine oder getrennt zur Bearbeitungsmaschine fest installiert sein. Des weiteren kann eine Antriebsmechanik vorgesehen sein, wodurch die zumindest eine Messvorrichtung für jede einzelne Messung in dem Messbereich positioniert wird.

Zur ersten Messvorrichtung ist bevorzugt zumindest eine weitere Messvorrichtung eingesetzt. Insbesondere bei Bearbeitungsmaschinen mit einer Hirthverzahnung wird diese zumindest eine weitere Messvorrichtung eingesetzt, um das Spiel der Werkstücktrommel während dem Verfahren des Werkstücks von einer Bearbeitungsstation in eine nächste Bearbeitungsstation zu erfassen. Durch einen vorzugsweisen Vergleich der erfassten Messwerte der ersten Messvorrichtung und der zumindest einen weiteren Messvorrichtung kann das bei der ersten Messvorrichtung mit erfasste Spiel herausgerechnet werden, wodurch eine präzise Werkstücklängenabfrage oder Geometrie- oder Formenabfrage des Werkstücks gegeben ist.

Die Erfindung sowie weitere vorteilhafte Ausführungsformen und Weiterbildungen derselben werden im folgenden anhand dem in der Zeichnung dargestellten Beispiel näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Figur 1: eine schematische Seitenansicht eines Ausschnitts von einer Bearbeitungsmaschine,
- Fig. 2a u. b: eine schematische Darstellung einer Messvorrichtung im Schwenkbereich eines Werkstücks,
- Figur 3: eine schematische Darstellung einer alternativen Anwendungsform und
- Figur 4: eine schematische Darstellung einer Prüfsituation gemäß einer Anwendung in Figur 3.

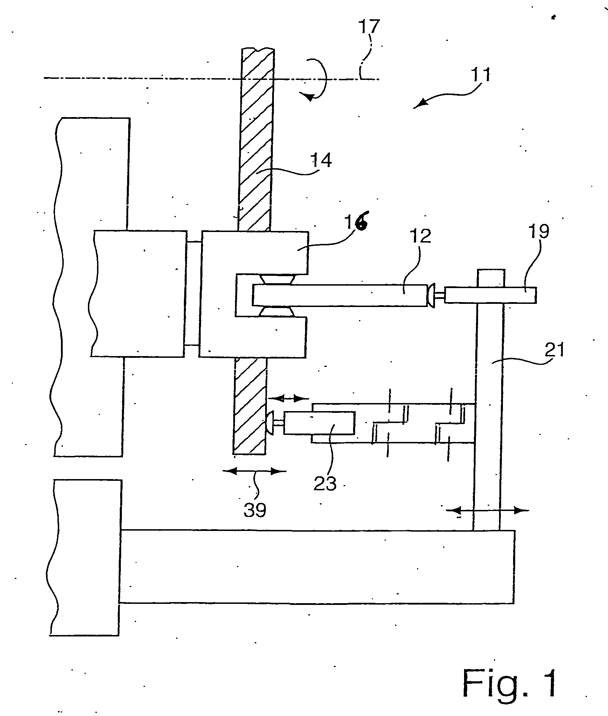

In Figur 1 ist ein Ausschnitt einer Bearbeitungsmaschine 11 zur Herstellung von Werkstücken 12 dargestellt. Beispielsweise ist diese Bearbeitungsmaschine 11 als Drehautomat oder als Bearbeitungszentrum ausgebildet. An einer Werkstücktrommel 14 sind zumindest zwei Werkstückaufnahmen 16 vorgesehen, welche jeweils ein Werkstück 12 zur Bearbeitung aufnehmen. Die Werkstücktrommel 14 ist um eine Drehachse 17 drehbar gelagert, so dass die zumindest eine Werkstückaufnahme 16 von einer ersten Bearbeitungsstation in eine weitere Bearbeitungsstation durch Rotation übergeführt wird.

Die in Figur 1 dargestellte Position des Werkstücks 12 und der Werkstückaufnahme 14 zeigt einen Wechsel von einer Bearbeitungsstation zur nachfolgenden Bearbeitungsstation. Eine Messvorrichtung 19 ist im Schwenkbereich des Werkstücks 12 oder zumindest an den Schwenkbereich angrenzend durch eine Haltevorrichtung 21 positioniert. Somit kann beim Überführen des Werkstücks 12 in eine nachfolgende Station eine Messung der Länge des Werkstückes 12 ermöglicht sein.

An der Halterung 21 ist des weiteren zumindest eine weitere Messvorrichtung 23 vorgesehen, welche an der Werkstücktrommel 14 anliegt. Durch die zumindest zwei Messvorrichtungen 19 und 23 kann eine exakte Erfassung der Werkstücklänge gegeben sein. Ebenso können zu kurze Teile erfasst werden.

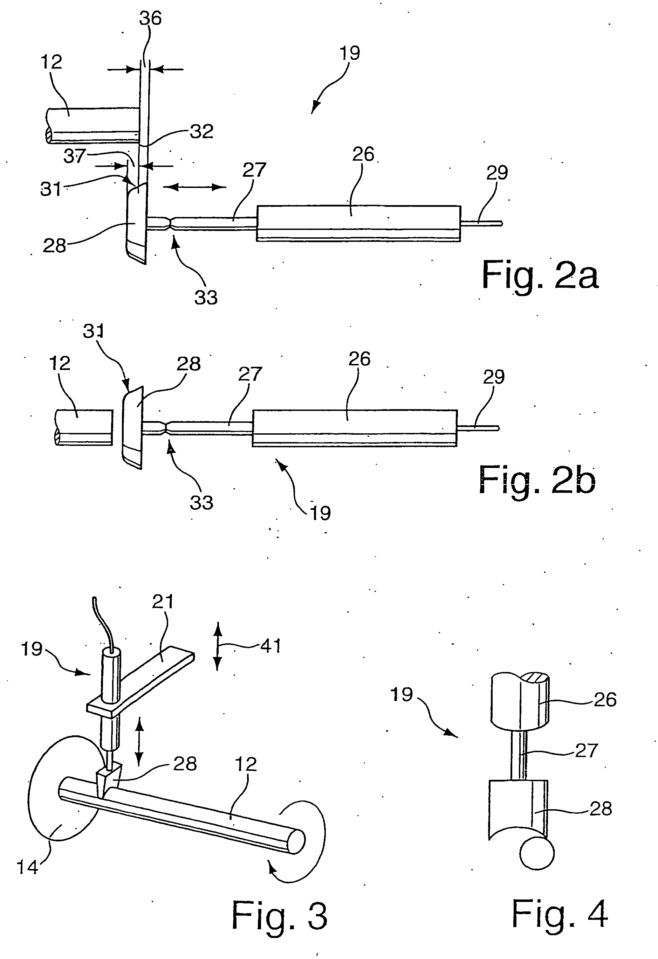

Die Messvorrichtungen 19, 23, welche in den Figuren 2a und b näher dargestellt sind, weisen ein Gehäuse 26 auf, welches einen Schaft 27 aufnimmt, der einen Messkopf 28 trägt. Der Schaft 27 ist eintauchbar in dem Gehäuse 26 gelagert. Vorzugsweise ist der Messkopf 28 beziehungsweise der Schaft 27 vorgespannt in dem Gehäuse 26 vorgesehen, so dass eine exakt erfassbare Grundposition zur Durchführung der Messung gegeben ist. Die erfassten Signale werden über eine Datenleitung 29 an eine Prozessüberwachung oder -steuerung weitergeleitet. Der Messkopf 28 weist eine Auflaufschräge 31 auf. Vorzugsweise ist der Messkopf 28 rotationssymmetrisch ausgebildet, so dass unabhängig der radialen Position ein leichtes Aufgleiten des freien Endes 32 des Werkstücks 12 ermöglicht ist, so dass der Messkopf 28 in eine Eintauchbewegung relativ zum Gehäuse 26 übergeführt wird. Der Schaft 27 weist bevorzugt eine Sollbruchstelle 33 auf. Darüber hinaus kann eine nicht näher dargestellte Aufnahme an dem Schaft 27 vorgesehen sein, an der der Messkopf auswechselbar vorgesehen ist. Dadurch können in Abhängigkeit des Anwendungsfalles unterschiedliche geometrische Formen des Messkopfes 28 eingesetzt werden. Ein alternatives Beispiel ist in den Figuren 3 und 4 dargestellt.

In Figur 2a ist der Messkopf 28 beispielsweise derart angeordnet, dass dieser mit seiner hinteren Kante an den durch die Linie 36 gekennzeichneten Schwenkbereich angrenzt. Das Werkstück 12 wird beim Schwenken der Werkstücktrommel 14 auf die Auflaufschräge 31 mit seinem freien Ende 32 zubewegt. Der Eintauchweg 37 wird erfasst und an die Prozesssteuerung weitergeleitet. Dadurch kann ermittelt werden, ob es sich um ein Gut- oder ein Schlechtteil handelt. Die Auflaufschräge 31 ist bevorzugt größer als der Toleranzbereich der Werkstücklänge ausgebildet, so dass sich der Messkopf 28 nach Einstellung der Messvorrichtung 23 im Toleranzfeld des Schwenkbereiches für die Werkstücklänge befindet. Sofern beispielsweise ein zu kurzes Teil sich in der Werkstücktrommel 14 befindet, wie dies in Figur 2b dargestellt ist, wird die Messvorrichtung 19 nicht betätigt. Dadurch wird ein Signal nicht innerhalb des Messerfassungszyklusses ausgegeben, so dass ein Schlechtteil oder Ausschuss erkannt wird.

Bei einer Bearbeitungsmaschine 11 mit einer Hirthverzahnung wird die Trommel 14 zum Wechseln der Bearbeitungsstation gemäß Pfeil 39 hinund herbewegt. Dabei tritt ein Spiel bei dieser Bewegung auf, welches bei einer Messung, wie beispielsweise zu Figur 2a beschrieben, verfälscht. Um das Spiel zu erfassen, ist die Messvorrichtung 32 vorgesehen, welche in einer indexierten Position der Werkstücktrommel 14 mit einem definierten Druck an der Werkstücktrommel 14 anliegt. Während der Wechsel wird der Eintauchweg des Messkopfes 28 der Messvorrichtung 23 erfasst. Dieses erfasste Signal wird mit dem der Messvorrichtung 19 erfassten Signal verwertet, in dem das Spiel herausgerechnet wird. Dadurch kann eine exakte Länge des Werkstücks 12 erfasst werden. Dadurch lassen sich Messgenauigkeiten, beispielsweise in einem Bereich von +/- 5 µm erzielen.

Alternativ kann vorgesehen sein, dass die Messeinrichtung auf einen Referenzwert eingestellt wird und im Anschluss daran die Wegstrecke der Werkzeugtrommel abgefragt wird. Diese gemessene Wegstrecke wird von dem ermittelten Wert der Messvorrichtung 19 abgezogen, wodurch die absolute Messgröße für das Teil 12 ermittelt wird.

Beispielsweise kann der Referenzwert für jedes einzelne Segment der Werkzeugaufnahme durchgeführt und abgespeichert werden. Dies ist insbesondere bei aufgesetzten Segmenten von Vorteil, wodurch auch für derartige Anwendungsfälle exakten Messdaten ermittelt werden.

Diese Anordnung weist den Vorteil auf, dass eine Abfrage der Werkstücklänge zwischen der Bearbeitungsstation erfolgen kann, so dass in der Bearbeitungsstation das Werkstück 12 stirnseitig als auch radialseitig durch Werkzeuge zugänglich ist. Sofern eine Bearbeitungsmaschine 11 eine Werkstücktrommel 14 mit mehreren Werkzeugaufnahmen umfasst, welche jedoch in dem Bearbeitungsprozess nicht alle benötigt werden, kann die Messvorrichtung stirnseitig in einer Bearbeitungsstation angeordnet sein, um die Messung durchzuführen. In diesem Fall wird die Eintauchbewegung zum Zeitpunkt der indexierten Werkstücktrommel 14 abgefragt, um ein Messsignal ohne Spiel zu erhalten.

Diese Werkstücklängenabfrage ist beispielsweise vor einem letzten Bearbeitungsschritt vorgesehen, bei dem das Werkstück auf eine vorgegebene Länge abgestochen oder abgedreht wird.

Bei der oben beschriebenen Ausführungsform sind die Messvorrichtungen 19, 23 fest in einer Messposition angeordnet. Eine passive Abfrage wird dadurch erzielt.

Alternativ kann vorgesehen sein, dass die Messvorrichtungen 19 und/oder 23 aktiv an den Messbereichen gemäß der Linie 36 angrenzend oder eintauchend positioniert werden. Hierfür kann an der Haltevorrichtung 21 eine Antriebseinheit und Positioniereinheit vorgesehen sein, welche die Messvorrichtungen 19 oder 23 jeweils lagerichtig zur Durchführung der Messung und Erfassung einer Werkstücklänge positioniert.

In den Figuren 3 und 4 ist ein alternativer Einsatzfall vorgesehen. Durch die Ausgestaltung des Messkopfes 28, der an die Geometrien der zu prüfenden und überwachenden Werkstücke angepasst ist, kann das erfindungsgemäße Verfahren zum Erfassen der Form beziehungsweise des Durchmessers als auch zur Rundlaufprüfung durchgeführt werden. Beispielsweise wird die Messvorrichtung 19 gemäß einer Verfahrstrecke 41 auf das Werkstück 12 zugeführt. Sofern beispielsweise das Werkstück 12 unrund gefertigt wurde, greift der Messkopf 28 nicht vollständig an dem Querschnitt des Werkstücks 12 an, sondern es wird eine Eintauchbewegung durchgeführt, wie beispielsweise aus Figur 4 hervorgeht. Dadurch wird ein Fehler erfasst.

Sofern das Werkstück 12 bezüglich der Lage seines Querschnitts ordnungsgemäß hergestellt ist, liegt der Messkopf 28 an der Oberfläche des Werkstücks 12 an. Nachfolgend wird zumindest eine Drehung des Werkstücks 12 durchgeführt. Eine Unwucht im zu prüfenden Bereich des Werkstücks 12 wird durch eine Hin- und Herbewegung des Schaftes 27 erfasst.

Die durch die Messvorrichtung 19, 23 ermittelten Daten werden an die Prozesssteuerung und Prozessüberwachungseinheit übermittelt und ausgewertet. Vorzugsweise können weitere Sensoren vorgesehen sein, welche den Beginn und das Ende einer Messung ansteuern. Bei einem zu kurzen Werkstück 12 oder in der Form oder in Geometrie nicht ordnungsgemäß hergestellten Werkstück 12 wird ein Signal an die Bearbeitungsmaschine ausgegeben, wodurch das als Schlechtteil detektierte Werkstück 12 aus dem weiteren Prozesszyklus aussortiert wird oder ein Werker über das Schlechtteil durch ein Signal informiert wird.

Eine weitere nicht näher dargestellte alternative Ausführungsform der Erfindung sieht vor, dass die Messvorrichtung 19, 23 als Sensor für zu fertigende Bohrungen eingesetzt wird. Bei Erreichen der Bohrtiefe kann ein Anschlag an dem Messkopf 28 anliegen, der der Bearbeitungsmaschine 11 ein Signal über ein Gut- oder Schlechtteil ausgibt und das Abschalten des Vorschubes bewirkt.

## Patentansprüche

1. Verfahren zum Erfassen einer Länge oder Form eines Werkstücks (12) in einer Bearbeitungsmaschine (11), bei der das zumindest eine Werkstück (12) von einer Werkstücktrommel (14) mit zumindest einer Werkstückaufnahme (16) aufgenommen wird und durch eine Schwenkbewegung der Werkstücktrommel (14) von einer Bearbeitungsstation in eine weitere Bearbeitungsstation übergeführt wird, **dadurch gekennzeichnet, dass** zumindest eine Messvorrichtung (19, 23) aktiv oder passiv in einem Messbereich positioniert wird, dass der Messbereich in oder benachbart zu einer Bearbeitungsstation vorgesehen ist und die Messung während der Schwenkbewegung der Werkstückaufnahme in eine nachfolgende Bearbeitungsstation oder am Ende dieser Schwenkbewegung der Werkstückaufnahme durchgeführt wird und die Messung durch die Messvorrichtung (19, 23) von einer Prozesssteuerung überwacht wird.

2. Verfahren nach Anspruch 1, **dadurch gekennzeichnet, dass** die Messvorrichtung (19) in einem Schwenkbereich einer zumindest ein Werkstück (12) aufnehmenden Werkstücktrommel (14) positioniert wird und durch eine Schwenkbewegung des Werkstücks (12) betätigt wird.

3. Verfahren nach Anspruch 1 oder 2, **dadurch gekennzeichnet, dass** die Messvorrichtung (19, 23) einen relativ zum Gehäuse (26) bewegbaren Messkopf (28) aufweist und die Lageänderung des Messkopfs (28) zum Gehäuse (26) erfasst wird.

4. Verfahren nach einem der vorhergehenden Ansprüche, **dadurch gekennzeichnet, dass** die Messvorrichtung (19, 23) auf zumindest ein Werkstück (12) zubewegt wird und der Verfahrweg bis zur Anlage an dem Werkstück (12) ermittelt wird.

5. Verfahren nach einem der vorhergehenden Ansprüche, **dadurch gekennzeichnet, dass** während einer Messung die Lage des Messkopfes der Messvorrichtung (19, 23) erfasst und überwacht wird.

6. Verfahren nach einem der vorhergehenden Ansprüche, **dadurch gekennzeichnet, dass** die Messvorrichtung (19) im Schwenkbereich zwischen zwei Bearbeitungsstationen positioniert wird und parallel zur Messvorrichtung (19) zumindest eine weitere Messvorrichtung (23) zu einer Werkstücktrommel positioniert wird, durch die das Spiel der Werkstücktrommel (14) während einem Positionswechsel der Werkstücke in eine nachfolgende Bearbeitungsstation erfasst wird.

7. Verfahren nach Anspruch 6, **dadurch gekennzeichnet, dass** der erfasste Messwert der im Schwenkbereich angeordneten Messvorrichtung (19) und der zumindest einen weiteren Messvorrichtung (23) zur Ermittlung eines Spiels erfasst und zur Ermittlung der exakten Werkstücklänge ausgewertet wird.

8. Verfahren nach Anspruch 1, **dadurch gekennzeichnet, dass** die Messvorrichtung (19) zur Stirnseite eines Werkstücks (12) in einer indexierten Lage der Werkstücktrommel (14) positioniert wird und eine Messung der Lage des Messkopfes vor dem Vorhandensein eines Werkstücks (12) und in einer indexierten Position der Werkstücktrommel (14) erfasst und verglichen wird.

9. Vorrichtung zum Erfassen einer Länge oder Form eines Werkstücks (12) in einer Bearbeitungsmaschine (11), bei der das Werkstück (12) während der Messung von einer Werkstückaufnahme (16) der Bearbeitungsmaschine (11) aufnehmbar ist, zur Durchführung des Verfahrens gemäß einem der Ansprüche 1 bis 8, **dadurch gekennzeichnet, dass** zumindest eine Messvorrichtung (19, 23) vorgesehen ist, welche aktiv oder passiv zumindest teilweise in einen Schwenkbereich des zumindest einen Werkstücks (12) oder daran angrenzend anordenbar ist und dass die Messvorrichtung (19, 23) einen Messkopf (28) mit einem daran angeordneten Schaft (27) aufweist, der vorgespannt in einem Gehäuse (26) der Messvorrichtung (19, 23) positioniert und in dem Gehäuse (26) verschiebbar angeordnet ist und die erfassten Signale an eine Prozesssteuerung weiterleitet.

10. Vorrichtung nach Anspruch 9, **dadurch gekennzeichnet, dass** die Messvorrichtung (19, 23) im Schwenkbereich zwischen zwei Bearbeitungsstationen angeordnet ist.

11. Vorrichtung nach Anspruch 9 oder 10, **dadurch gekennzeichnet, dass** die Messvorrichtung (19) ein von der Einspannstelle des Werkstücks (12) bis zum freien Ende (32) sich erstreckende Länge erfasst.

12. Vorrichtung nach einem der Ansprüche 9 bis 11, **dadurch gekennzeichnet, dass** die Messvorrichtung (19) einen Messkopf (28) aufweist, der im Randbereich eine Auflaufschräge (31) aufweist.

13. Vorrichtung nach einem der Ansprüche 9 bis 12, **dadurch gekennzeichnet, dass** die Messvorrichtung (19, 23) einen Messkopf (28) umfasst, der rotationssymmetrisch ausgebildet ist.

14. Vorrichtung nach einem der Ansprüche 9 bis 13, **dadurch gekennzeichnet, dass** die Messvorrichtung (19, 23) einen Messkopf (28) mit einem daran angeordneten Schaft (27) aufweist, der vorgespannt in einem Gehäuse (26) der Messvorrichtung (19, 23) positioniert und in dem Gehäuse (26) eintauchbar angeordnet ist.

15. Vorrichtung nach Anspruch 14, **dadurch gekennzeichnet, dass** der Schaft (27) eine Sollbruchstelle (33) aufweist.

16. Vorrichtung nach einem der Ansprüche 13 bis 15, **dadurch gekennzeichnet, dass** der Messkopf (28) austauschbar zum Schaft (27) angeordnet ist.

17. Vorrichtung nach einem der Ansprüche 9 bis 16, **dadurch gekennzeichnet, dass** der Messkopf (28) zum Gehäuse (26) der Messvorrichtung (19, 23) mit einem Sechstel bis einem Drittel des gesamten Messweges vorgespannt ist.

18. Vorrichtung nach einem der Ansprüche 9 bis 17, **dadurch gekennzeichnet, dass** die Länge des Eintauchweges des Schaftes (27) in das Gehäuse (26) der Messvorrichtung (19, 23) einstellbar ist.

19. Vorrichtung nach einem der Ansprüche 9 bis 18, **dadurch gekennzeichnet, dass** die Länge des Eintauchweges erfassbar ist und vorzugsweise die ermittelten Daten über eine Datenleitung an eine Prozessüberwachung weitergeleitet und vorzugsweise von einer Datenverarbeitungseinrichtung auswertbar sind.

20. Vorrichtung nach einem der Ansprüche 9 bis 19, **dadurch gekennzeichnet, dass** die Messvorrichtung (19, 23) von einer Haltevorrichtung (21) aufgenommen ist, die getrennt von der Bearbeitungsmaschine (11) vorgesehen ist oder an einem Gehäuse der Bearbeitungsmaschine (11) angreift.

21. Vorrichtung nach einem der Ansprüche 9 bis 20, **dadurch gekennzeichnet, dass** zumindest eine weitere Messvorrichtung (23) der ersten Messvorrichtung (29) zugeordnet ist, welche einen axialen Verfahrweg einer Werkstücktrommel (14) überwacht.

22. Vorrichtung nach Anspruch 21, **dadurch gekennzeichnet, dass** die weitere Messvorrichtung (23) an der Werkstücktrommel (14) anliegt und ein axialer Verschiebeweg oder ein Spiel der Werkstücktrommel (14) beim Wechseln in eine nachfolgende Bearbeitungsstation erfassbar ist.

23. Vorrichtung nach einem der Ansprüche 21 oder 22, **dadurch gekennzeichnet, dass** die zumindest eine weitere Messvorrichtung (23) parallel zur ersten Messvorrichtung (19) angeordnet ist.

24. Vorrichtung nach einem der Ansprüche 21 bis 23, **dadurch gekennzeichnet, dass** die weitere Messvorrichtung (23) in derselben Achse zur ersten Messvorrichtung (19) angeordnet ist.

## Claims

1. A method for determining a length or a shape of a workpiece (12) in a processing machine (11) in which the at least one workpiece (12) is held by a workpiece holding drum (14) having at least one workholding device (16) and is transferred from one processing station to another processing station by a swinging movement of the workpiece holding drum, **characterised in that** at least one measuring device (19, 23) is positioned in an active or passive manner within a zone of measurement, said zone of measurement is provided in, or adjacent to, a processing station, the measurement is carried out during the swinging movement of the workholding device into a subsequent processing station or at the end of said swinging movement of the workholding device, and said measurement by the measuring device (19, 23) is monitored by a process control unit.

2. The method as claimed in claim 1, **characterised in that** the measuring device (19) is positioned in a swinging range of a workpiece holding drum (14) holding at least one workpiece (12) and is actuated by a swinging movement of the workpiece (12).

3. The method as claimed in claim 1 or 2, **characterised in that** the measuring device (19, 23) is provided with a measuring head (28) movable with respect to the housing (26), and the change of the position of the measuring head (28) with respect to the housing (26) is detected.

4. The method as claimed in any of the preceding claims, **characterised in that** the measuring device (19, 23) is moved towards at least one workpiece (12) and the distance of travel until establishing contact with the workpiece (12) is determined.

5. The method as claimed in any of the preceding claims, **characterised in that** during a measurement the position of the measuring head of the measuring device (19, 23) is detected and monitored.

6. The method as claimed in any of the preceding claims, **characterised in that** the measuring device (19) is positioned in the swinging range between two processing stations and, in parallel with the measuring device (19), at least one further measuring device (23) is positioned facing towards a workpiece holding drum so as to detect the play of the workpiece holding drum (14) during a change in position by which the workpieces are moved to a subsequent processing station.

7. The method as claimed in claim 6, **characterised in that** the values of measurement acquired by the measuring device (19) arranged in the swinging range and by the at least one further measuring device (23) are evaluated for determining a play and for determining the exact length of the workpiece.

8. The method as claimed in claim 1, **characterised in that** the measuring device (19) is positioned facing towards the end face of a workpiece (12) when the workpiece holding drum (14) is in an indexed position, a measurement of the position of the measuring head prior to the presence of a workpiece (12) is carried out with the workpiece holding drum (14) in an indexed position, and said measurements are compared.

9. An apparatus for determining a length or a shape of a workpiece (12) in a processing machine (11) in which the workpiece (12) may be held, during the measurement, by a workholding device (16) of the processing machine (11) for carrying out the method as claimed in any of the claims 1 to 8, **characterised in that** at least one measuring device (19, 23) is provided which may be arranged in an active or passive manner at least partially within a swinging range of the at least one workpiece (12) or adjacent thereto and the measuring device (19, 23) is provided with a measuring head (28) having a shaft (27) arranged thereon which is positioned with a bias in a housing (26) of the measuring device (19, 23) and is arranged so as to be movable within the housing (26) and which transmits the acquired signals to a process control unit.

10. The apparatus as claimed in claim 9, **characterised in that** the measuring device (19, 23) is arranged in the swinging range between two processing stations.

11. The apparatus as claimed in claim 9 or 10, **characterised in that** the measuring device (19) determines a length extending from the point of fixation of the workpiece (12) to the free end (32).

12. The apparatus as claimed in any of the claims 9 to 11, **characterised in that** the measuring device (19) has a measuring head (28) which has a run-on slope (31) formed in the edge portion thereof.

13. The apparatus as claimed in any of the claims 9 to 12, **characterised in that** the measuring device (19, 23) comprises a measuring head (28) which is rotationally symmetrical.

14. The apparatus as claimed in any of the claims 9 to 13, **characterised in that** the measuring device (19, 23) is provided with a measuring head (28) having a shaft (27) arranged thereon which is positioned with a bias in a housing (26) of the measuring device (19, 23) and is arranged so as to be capable of plunging into the housing (26).

15. The apparatus as claimed in claim 14, **characterised in that** the shaft (27) has a predetermined breaking point (33).

16. The apparatus as claimed in any of the claims 13 to 15, **characterised in that** the measuring head (28) is arranged with respect to the shaft (27) in such a manner as to be replaceable.

17. The apparatus as claimed in any of the claims 9 to 16, **characterised in that** the measuring head (28) is biased with respect to the housing (26) of the measuring device (19, 23) by a distance of between one sixth and one third of the total measuring path.

18. The apparatus as claimed in any of the claims 9 to 17, **characterised in that** the length of the plunging path of the shaft (27) into the housing (26) of the measuring device (19, 23) is adjustable.

19. The apparatus as claimed in any of the claims 9 to 18, **characterised in that** the length of the plunging path may be detected and the determined data are preferably transmitted to a process monitoring unit via a data line and are preferably suitable to be evaluated by a data processing assembly.

20. The apparatus as claimed in any of the claims 9 to 19, **characterised in that** the measuring device (19, 23) is accommodated by a holding device (21) which is provided separately from the processing machine (11) or is applied on a housing of the processing machine (11).

21. The apparatus as claimed in any of the claims 9 to 20, **characterised in that** at least one further measuring device (23) is associated with the first measuring device (19) and monitors an axial travel of a workpiece holding drum (14).

22. The apparatus as claimed in claim 21, **characterised in that** the further measuring device (23) abuts on the workpiece holding drum (14) and upon a change to a subsequent processing station a distance of axial displacement or a play of the workpiece holding drum (14) may be detected.

23. The apparatus as claimed in any of the claims 21 or 22, **characterised in that** the at least one further measuring device (23) is disposed parallel to the first measuring device (19).

24. The apparatus as claimed in any of the claims 21 to 23, **characterised in that** the further measuring device (23) is disposed in the same axis as the first measuring device (19).

## Revendications

1. Procédé permettant de saisir une longueur ou une forme d'une pièce à usiner (12) dans une machine d'usinage (11), dans laquelle ladite au moins une pièce à usiner (12) est reçue par un tambour porte-pièce équipé d'au moins un dispositif de fixation de pièce (16) et passe, suite à un mouvement pivotant du tambour porte-pièce (14), d'une station d'usinage à une autre station d'usinage, **caractérisé en ce qu'**au moins un dispositif de mesure (19, 23) est positionné de manière active ou passive dans une zone de mesure donnée, que ladite zone de mesure est prévue dans une ou à proximité d'une station d'usinage et que la mesure est effectuée pendant le mouvement pivotant du dispositif de fixation de pièce lors du passage à une station d'usinage suivante ou à la fin dudit mouvement pivotant du dispositif de fixation de pièce, et que la mesure effectuée par le dispositif de mesure (19, 23) est contrôlée par une commande de processus.

2. Procédé selon la revendication 1, **caractérisé en ce que** le dispositif de mesure (19) est positionné dans un champ de pivotement d'un tambour porte-pièce (14) recevant au moins une pièce à usiner (12) et est actionné par un mouvement pivotant de la pièce à usiner (12).

3. Procédé selon la revendication 1 ou 2, **caractérisé en ce que** le dispositif de mesure (19, 23) présente une tête de mesure (28) déplaçable par rapport au boîtier (26) et que le changement de position de la tête de mesure (28) par rapport au boîtier (26) est saisi.

4. Procédé selon l'une des revendications précédentes, **caractérisé en ce que** le dispositif de mesure (19, 23) est déplacé vers au moins une pièce à usiner (12) et que la distance de déplacement parcourue jusqu'à la mise en contact avec la pièce à usiner (12) est déterminée.

5. Procédé selon l'une des revendications précédentes, **caractérisé en ce que**, pendant une mesure, la position de la tête de mesure du dispositif de mesure (19, 23) est saisie et surveillée.

6. Procédé selon l'une des revendications précédentes, **caractérisé en ce que** le dispositif de mesure (19) est positionné dans le champ de pivotement entre deux stations d'usinage et que, parallèlement audit dispositif de mesure (19), est positionné au moins un dispositif de mesure supplémentaire (23) orienté vers un tambour porte-pièce, grâce auquel dispositif est saisi le jeu du tambour porte-pièce (14) pendant un changement de position des pièces à usiner lors du passage à une station d'usinage suivante.

7. Procédé selon la revendication 6, **caractérisé en ce que** la valeur mesurée saisie par le dispositif de mesure (19) disposé dans le champ de pivotement et celle saisie par ledit au moins un dispositif de mesure supplémentaire (23) permettant de saisir un jeu sont saisies et évaluées en vue de déterminer la longueur exacte de la pièce à usiner.

8. Procédé selon la revendication 1, **caractérisé en ce que** le dispositif de mesure (19) est positionné, dans une position indexée du tambour porte-pièce (14), de manière à être orienté vers l'about d'une pièce à usiner (12) et qu'une mesure de la position de la tête de mesure est saisie, dans une position indexée du tambour porte-pièce (14), avant la présence d'une pièce à usiner (12), et que lesdites mesures sont comparées.

9. Dispositif permettant de saisir une longueur ou une forme d'une pièce à usiner (12) dans une machine d'usinage (11), dans laquelle la pièce à usiner (12) peut être fixée, pendant la mesure, par un dispositif de fixation de pièce (16) de la machine d'usinage (11) afin de réaliser le procédé selon l'une des revendications 1 à 8, **caractérisé en ce qu'**il est prévu au moins un dispositif de mesure (19, 23) qui peut être disposé, de manière active ou passive, au moins partiellement dans un champ de pivotement de ladite au moins une pièce à usiner (12) ou à proximité de celui-ci et **en ce que** le dispositif de mesure (19, 23) présente une tête de mesure (28) sur laquelle est disposée une tige (27) qui est positionnée en prétension dans un boîtier (26) du dispositif de mesure (19, 23), et qui est disposée dans ledit boîtier (26) de manière à pouvoir se déplacer et qui transmet les signaux saisis à une commande de processus.

10. Dispositif selon la revendication 9, **caractérisé en ce que** le dispositif de mesure (19, 23) est disposé dans le champ de pivotement entre deux stations d'usinage.

11. Dispositif selon la revendication 9 ou 10, **caractérisé en ce que** le dispositif de mesure (19) saisit une longueur allant du point de fixation de la pièce à usiner (12) à l'extrémité libre (32) de celle-ci.

12. Dispositif selon l'une des revendications 9 à 11, **caractérisé en ce que** le dispositif de mesure (19) présente une tête de mesure (28) qui présente dans sa partie périphérique un plan de réception incliné (31).

13. Dispositif selon l'une des revendications 9 à 12, **caractérisé en ce que** le dispositif de mesure (19, 23) comprend une tête de mesure (28) qui est à symétrie de rotation.

14. Dispositif selon l'une des revendications 9 à 13, **caractérisé en ce que** le dispositif de mesure (19, 23) présente une tête de mesure (28) sur laquelle est disposée une tige (27) qui est positionnée en prétension dans un boîtier (26) du dispositif de mesure (19, 23) et qui est disposée dans ledit boîtier (26) de manière à pouvoir rentrer dans celui-ci.

15. Dispositif selon la revendication 14, **caractérisé en ce que** la tige (27) présente un point destiné à la rupture (33).

16. Dispositif selon l'une des revendications 13 à 15, **caractérisé en ce que** la tête de mesure (28) est disposée par rapport à la tige (27) de manière à pouvoir être remplacée.

17. Dispositif selon l'une des revendications 9 à 16, **caractérisé en ce que** la tête de mesure (28) est prétendue par rapport au boîtier (26) du dispositif de mesure (19, 23) avec une longueur comprise entre un sixième et un tiers de la totalité de la course de mesure.

18. Dispositif selon l'une des revendications 9 à 17, **caractérisé en ce que** la longueur de la course de rentrée de la tige (27) dans le boîtier (26) du dispositif de mesure (19, 23) peut être réglée.

19. Dispositif selon l'une des revendications 9 à 18, **caractérisé en ce que** la longueur de la course de rentrée peut être saisie et que les données déterminées sont, de préférence, transmises par une ligne de données à un dispositif de surveillance de processus et sont, de préférence, évaluées par un dispositif de traitement de données.

20. Dispositif selon l'une des revendications 9 à 19, **caractérisé en ce que** le dispositif de mesure (19, 23) est reçu dans un dispositif de fixation (21) qui est prévu de manière indépendante de la machine d'usinage (11) ou qui s'appuie contre un boîtier de la machine d'usinage (11).

21. Dispositif selon l'une des revendications 9 à 20, **caractérisé en ce qu'**au premier dispositif de mesure (19) est associé au moins un dispositif de mesure supplémentaire (23) qui surveille une distance de déplacement axial d'un tambour porte-pièce (14).

22. Dispositif selon la revendication 21, **caractérisé en ce que** le dispositif de mesure supplémentaire (23) repose contre le tambour porte-pièce (14) et qu'il est possible de saisir une distance de déplacement axial ou un jeu du tambour porte-pièce (14) lors du passage à une station d'usinage suivante.

23. Dispositif selon l'une des revendications 21 ou 22, **caractérisé en ce que** ledit au moins un dispositif de mesure supplémentaire (23) est disposé parallèlement au premier dispositif de mesure (19).

24. Dispositif selon l'une des revendications 21 à 23, **caractérisé en ce que** le dispositif de mesure supplémentaire (23) est disposé dans le même axe par rapport au premier dispositif de mesure (19).
